# EUROPÄISCHE PATENTSCHRIFT

(11) **EP 1 609 658 B1**
(45) Veröffentlichungstag und Bekanntmachung des Hinweises auf die Patenterteilung: **22.08.2007**
(21) Anmeldenummer: 05104444.4
(22) Anmeldetag: 25.05.2005
(51) Int. Cl.: B60W 30/18

(54) **Verfahren und Vorrichtung zum automatischen Anfahren**
Method and device for automatic drive off
Procédé et dispositif du démarrage automatique d'un véhicule automobile

(30) Priorität: 25.06.2004 DE 102004031030
(43) Veröffentlichungstag der Anmeldung: 28.12.2005
(73) Patentinhaber: ROBERT BOSCH GMBH, 70442 Stuttgart (DE)
(72) Erfinder: Hoetzer, Dieter, 71706, Markgroenningen (DE); Kroehnert, Andre, 98693, Unterpoerlitz (DE)

(56) Entgegenhaltungen:
- EP-A- 0 822 129
- EP-A- 1 034 962
- EP-A- 1 304 251
- DE-A1- 10 230 651
- DE-A1- 19 934 670
- DE-A1- 19 958 520

## Beschreibung

Die vorliegende Erfindung betrifft ein Verfahren und eine Vorrichtung zum automatischen Anfahren eines mit einer Objektsensorik und einem adaptiven Abstands- und Geschwindigkeitsregler ausgestatteten Fahrzeugs mit Handschaltgetriebe aus dem Stillstand, bei dem der Fahrer zur Durchführung des Anfahrvorgangs lediglich das Kupplungspedals betätigen muss und in Abhängigkeit eines Kupplungsbetätigungssignals die Bremse gelöst und die Motordrehzahl geregelt wird.

### Stand der Technik

Aus der DE 199 34 670 A1 ist ein Objektdetektionssystem, insbesondere für ein Kraftfahrzeug bekannt, wobei das Objektdetektionssystem aus einer Kombination von wenigstens drei Objektdetektoren besteht, die jeweils einen anderen Detektionsbereich und/oder eine andere Detektionsreichweite aufweisen. Dieses Objektdetektionssystem ist weiterhin geeignet, im Rahmen eines erweiterten Systems zur adaptiven Fahrgeschwindigkeitsregelung eingesetzt zu werden, wobei das erweiterte System in der Lage ist, die Geschwindigkeit des Kraftfahrzeugs kontinuierlich zwischen dem Stillstand und der Höchstgeschwindigkeit des Kraftfahrzeugs zu regeln.

Aus der DE 102 30 651 A1 ist eine Kupplung für Kraftfahrzeuge und ein Verfahren zum Regeln der Motordrehzahl mittels eines Drehzahlregler bekannt, wobei die Kupplung ein Element zum Detektieren der Kupplungszustände "offen", "schlupfend", "geschlossen" aufweist, das mit dem Drehzahlregler elektrisch verbunden ist. Der mit der Kupplung verbundene Drehzahlregler weist einen einstellbaren p- und i-Anteil auf und ist so regelbar, dass er bei detektierten Zustand "schlupfend" oder "offen" der Kupplung mit einem einstellbaren ersten p-und i-Anteil betreibbar ist und bei detektiertem Zustand "geschlossen" der Kupplung mit einem einstellbaren zweiten p- und i-Anteil betreibbar ist. Die DE 102 30 651 A1 zeigt alle Merkmale als Anspruchs 1 mit Ausnahme des zwingend vorgesehenen ersten Gangs.

Aus der DE 199 58 520 ist ein Geschwindigkeitsregler bekannt, der nicht nur ab einer bestimmten Mindestgeschwindigkeit die Fahrgeschwindigkeit des Fahrzeugs regelt, sondern auch bei Geschwindigkeiten unterhalb einer vorgegebenen Grenzgeschwindigkeit bis hin zum Stillstand des Fahrzeugs regelt. Durch Erfassung der Verkehrssituation durch einen Abstandssensor kann auch ein automatisches Anfahren des Fahrzeugs erfolgen, wenn der Fahrer auf einen entsprechenden Anfahrhinweis reagiert hat. Der Anfahrhinweis ist bis zu einer vorgegebenen Grenzzeit wirksam, kann alternativ jedoch auch wiederholt werden. In jeder Verkehrssituation hat der Fahrer jedoch die Möglichkeit, durch Betätigen von Gas oder Bremspedal den Geschwindigkeitsregler zu übersteuern.

Adaptive Abstands- und Geschwindigkeitsregler, die die Geschwindigkeit eines Fahrzeugs kontinuierlich zwischen dem Stillstand und der Höchstgeschwindigkeit regeln können, müssen weiterhin in der Lage sein, ein Fahrzeug in den Stillstand abzubremsen, dieses in Abhängigkeit bestimmter Umgebungsbedingungen im Stillstand zu halten und bei einer entsprechenden Verkehrssituation dieses Fahrzeug wieder selbsttätig anzufahren. Bei Kraftfahrzeugen, die über ein Automatikgetriebe verfügen, ist ein Abbremsen, Anhalten sowie Anfahren lediglich durch Ansteuerung der Antriebseinrichtungen sowie der Verzögerungseinrichtungen möglich. Bei Fahrzeugen mit manuell betätigtem Handschaltgetriebe hingegen ist eine zusätzliche Fahrerinteraktion zum Anfahren nötig.

### Kern und Vorteile der Erfindung

Kern der vorliegenden Erfindung ist es, ein Verfahren und eine Vorrichtung anzugeben, mit denen ein automatisches Anfahren eines Fahrzeugs mit Handschaltgetriebe, das mit einem adaptiven Abstands- und Geschwindigkeitsregler und einer Objektsensorik ausgestattet ist, für den Fahrer so komfortabel wie möglich zu gestalten und hierbei das intuitive Fahrverhalten des Fahrers nachzubilden, so dass die Bedienung der Vorrichtung sowie der Ablauf des Verfahrens durch den Fahrer intuitiv erlernbar ist und durch den Fahrer schnell angenommen wird. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise wird die Motordrehzahl während dem Anfahrvorgang in Abhängigkeit von der Kupplungspedalbetätigung geregelt. Hierbei ist es besonders vorteilhaft, wenn die Motordrehzahl in Abhängigkeit des veränderten Kupplungsweges geregelt wird, wobei diese beiden Größen linear oder mittels einer anderen Funktion verknüpft sein können.

Weiterhin ist es vorteilhaft, dass die Motordrehzahl in Abhängigkeit des momentanen Fahrzeugwiderstands geregelt wird. Der Fahrzeugwiderstand wird hierbei insbesondere in Abhängigkeit der Größen Fahrzeuggewicht sowie Fahrbahnsteigung bestimmt, wobei bei einem höheren Fahrwiderstand die Motordrehzahl in Abhängigkeit des Kupplungsweges stärker erhöht werden muss, um ein Anfahren des Fahrzeugs zu ermöglichen.

Weiterhin ist es vorteilhaft, dass für ein Anfahren mittels Kupplungspedalbetätigung der erste Gangs eingelegt, die Kupplung getreten und der Motor in Betrieb sein muss. Sollte eine dieser Bedingungen nicht erfüllt sein, so ist ein automatisches Anfahren nur in Abhängigkeit einer Kupplungspedalbetätigung nicht möglich, so dass in diesem Fall ein herkömmliches Anfahren des Fahrzeugs nötig ist. Vorteilhafterweise wird zu Beginn des Einkuppelvorgangs die Bremse selbsttätig geöffnet. Der Beginn des Einkuppelvorgangs wird erkannt, indem die getretene Kupplung langsam zurückgenommen wird und durch den Kupplungswegsensor eine Kupplungsbetätigung erkannt wird. In diesem Fall kann die Bremse, die das Fahrzeug im Stillstand hält, automatisch geöffnet werden, so dass das Fahrzeug anfahren kann.

Alternativ zum Kupplungswegsensor, der erkennt, wie weit das Kupplungspedal durch den Fahrer betätigt ist, ist im Rahmen dieser Anmeldung auch ein Kupplungssensor einfacherer Art verwendbar, der lediglich erkennt, ob die Kupplung geöffnet oder geschlossen ist. Als weitere Alternative ist auch ein Kupplungssensor verwendbar, der zusätzlich zu den Zuständen "Kupplung geschlossen" oder "Kupplung geöffnet" den weiteren Zustand "Kupplung schleift" erkennt, ohne jedoch den durch den Fahrer momentan betätigten Kupplungsweg festzustellen, wie es mittels eines Kupplungswegsensors möglich wäre.

Weiterhin ist es vorteilhaft, dass die Kupplungsbetätigung mittels eines Vergleichs der Motordrehzahl mit der Getriebeeingangsdrehzahl ermittelbar ist. Durch den Vergleich der Motorausgangsdrehzahl mit der Getriebeeingangsdrehzahl ist die Momentenübertragung der Kupplung messbar, wodurch sich die momentane Kraftschlüssigkeit der Kupplung ermitteln lässt.

Weiterhin ist es vorteilhaft, dass ein Anfahren mittels Kupplungsbetätigung nur dann möglich ist, wenn der Abstand des Fahrzeugs zum vorausbefindlichen Fahrzeug im Stillstand einen Mindestabstand überschreitet. Dies soll verhindern, dass bei zu nahem Auffahren vor der Ampel das Fahrzeug selbständig anfahren kann und eventuell ein Auffahrunfall verursacht wird. Wird der Abstand d so klein, dass der Mindestabstand dₘᵢₙ unterschritten wird, so ist ein Anfahren des Fahrzeugs nur durch herkömmliche manuelle Getriebeschalttätigkeit und manuelle Kupplungsbetätigung möglich.

Weiterhin ist es vorteilhaft, dass der Anfahrvorgang abgeschlossen wird, wenn die Motordrehzahl gleich der Getriebeeingangsdrehzahl ist und der Kupplungsweg einen Schwellenwert überschritten hat. In diesem Fall hat das Fahrzeug eine Geschwindigkeitsschwelle S2 überschritten, so dass der Anfahrvorgang beendet werden kann und durch eine herkömmliche Fahrgeschwindigkeits- oder Abstandsregelung mittels des Abstands- und Geschwindigkeitsreglers fortgesetzt werden kann.

Weiterhin ist es vorteilhaft, dass der adaptive Abstands- und Geschwindigkeitsregler bei Beginn des Einkupplungsvorgangs selbsttätig die Bremse löst. Der Begriff Bremse wird im Rahmen der vorliegenden Erfindung gleichbedeutend
- für eine herkömmliche Bremse mit aktivem Bremskraftverstärker, bei dem das Pedalgestänge elektronisch gesteuert verschoben werden kann,
- für eine Bremse mit hydraulischem Bremssteller, wie sie in Fahrsicherheitssystemen wie ASR (Antischlupfregelung) und ESP(elektronische Fahrdynamikregelung) verwendet wird, bei der elektronisch gesteuerte Bremsaktoren in Form von Motorpumpen oder Ventilen angesteuert werden,
- für eine elektrohydraulische Bremse SBC (Sensotronic Brake Control) und
- für eine automatisierte Parkbremse
verwendet. Die Realisierung der Bremsfunktion hängt hierbei von der Bremsenausstattung des jeweiligen Fahrzeugs ab und kann eine oder mehrere der aufgeführten Verzögerungseinrichtugen oder Feststellbremsen einschliessen.

Weiterhin ist es vorteilhaft, dass die Kupplungsbetätigung mittels eines Kupplungswegsensors ermittelt wird, der die momentane Auslenkung des Kupplungspedals durch den Fahrer erfasst und einer Auswerteeinrichtung zuführt.

Weiterhin ist es vorteilhaft, dass die Objektsensorik als Radarsensor, als Lasersensor, als Ultraschallsensor, als Videosensor oder als eine Kombination dieser Sensorarten ausgeführt ist.

Weiterhin ist es vorteilhaft, dass die Motordrehzahl dem Abstands- und Geschwindigkeitsregler zugeführt wird und bei einer Unterschreitung einer Mindestmotordrehzahl nₘᵢₙ während dem Einkuppelvorgang eine Fahrerwarnung ausgegeben wird. Hierdurch ist es möglich, den Fahrer vor einem Abwürgen des Motors durch einen zu schnellen Einkuppelvorgang zu warnen und ein unbeabsichtigtes Abwürgen des Motors zu verhindern.

Von besonderer Bedeutung ist die Realisierung des erfindungsgemäßen Verfahrens in der Form eines Steuerelements, dass für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einen Mikroprozessor oder Signalprozessor, ablauffähig und zur Ausführung des erfindungemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Zeichnungen

Nachfolgend werden Ausführungsbeispiele der Erfindung anhand von Zeichnungen erläutert. Es zeigen
Figur 1 ein Blockschaltbild einer Ausführungsform der erfindungsgemäßen Vorrichtung,
Figur 2 ein Zustands-Übergangs-Diagramm des erfindungsgemäßen Verfahrens,
Figur 3 ein weiteres Zustands-Übergangs-Diagramm des erfindungsgemäßen Verfahrens und
Figur 4 ein Motordrehzahl-Kupplungsweg-Diagramm des erfindungsgemäßen Verfahrens.

### Beschreibung von Ausführungsbeispielen

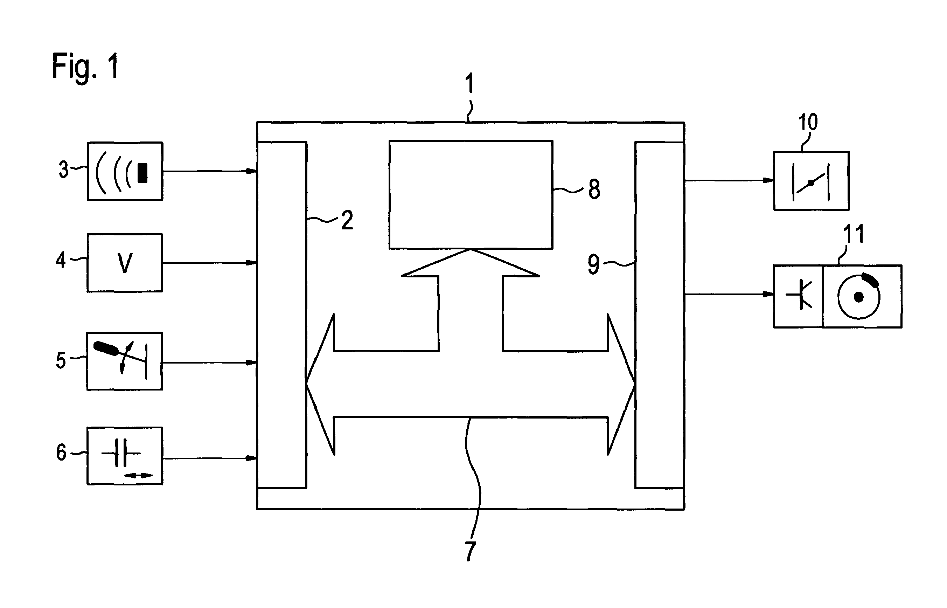

In Figur 1 ist ein adaptiver Abstands- und Geschwindigkeitsregler 1 dargestellt, dem Eingangssignale mittels einer Eingangsschaltung 2 zuführbar sind. Als Eingangssignale werden dem adaptiven Abstands- und Geschwindigkeitsregler 1 Signale einer Objektsensorik 3 zugeführt, die vorteilhafterweise als Radarsensor, als Lasersensor, als Ultraschallsensor, als Videosensor oder als eine Kombination aus diesen Sensorarten ausgeführt ist. Insbesondere die Kombination aus Radarsensor und Videosensor hat sich für die Objektsensorik 3 als vorteilhaft erwiesen. Die Objektsensorik 3 misst mindestens die Größen Abstand d und Relativgeschwindigkeit vᵣₑₗ von Objekten innerhalb des Sensorerfassungsbereichs, der bewegte Objekte vor dem eigenen Fahrzeug und auf benachbarten Fahrspuren vor dem Fahrzeug sowie stehende Ziele beispielsweise am Fahrbahnrand erkennt. Weiterhin kann vorgesehen sein, dass die Objektsensorik 3 einen Azimutwinkel der Objekte ermittelt, in dem diese bezüglich der verlängerten Fahrzeuglängsachse des Fahrzeugs positioniert sind. Weiterhin wird der Eingangsschaltung 2 des adaptiven Abstands- und Geschwindigkeitsreglers 1 ein Geschwindigkeitssignal v zugeführt, das von einem Geschwindigkeitssensor 4 bereitgestellt wird. Mittels dieses Geschwindigkeitssignals, das die Eigengeschwindigkeit des mit dem adaptiven Abstands- und Geschwindigkeitsregler 1 ausgerüsteten Fahrzeugs repräsentiert, ist es möglich, die Relativgeschwindigkeiten vᵣₑₗ, die von der Objektsensorik 3 ermittelt wurden, in Absolutwerte umzurechnen. Weiterhin werden der Eingangsschaltung 2 Signale einer fahrerbetätigbaren Bedieneinrichtung zugeführt, mittels der der Fahrer den adaptiven Abstands- und Geschwindigkeitsregler 1 einschalten und ausschalten kann sowie Regelparameter bezüglich der durchgeführten Längsregelung verändern kann um diesen auf die jeweiligen Fahreranforderungen einstellen zu können. Weiterhin wird der Eingangsschaltung 2 ein Signal eines Kupplungswegsensors 6 zugeführt, mittels dem die Betätigung des Kupplungspedals durch den Fahrer detektierbar und auswertbar ist. Hiermit wird erkannt, ob die Kupplung zwischen Motor und handgeschaltetem Getriebe geschlossen ist, geöffnet ist oder sich in einem schleifenden Zustand befindet sowie wie stark die Kupplung betätigt wird, wenn sie sich im schleifenden Zustand befindet. Die mittels der Eingangsschaltung 2 zugeführten Eingangsdaten werden im adaptiven Abstands- und Geschwindigkeitsregler 1 mittels einer Datenaustauscheinrichtung 7 an eine Berechnungseinrichtung 8 weitergeleitet. Die Berechnungseinrichtung 8 ermittelt in Abhängigkeit der ihr zugeführten Eingangssignale, Stellsignale für nachgeordnete Stellelemente. Wird beispielsweise mittels der Objektsensorik 3 kein vorausfahrendes Fahrzeug erkannt, so führt die Berechnungseinrichtung 8 eine Geschwindigkeitsregelung des eigenen Fahrzeugs im Sinne einer Geschwindigkeitskonstantregelung durch. Erkennt die Objektsensorik 3 ein vorherfahrendes Fahrzeug, so führt die Berechnungseinrichtung 8 eine Geschwindigkeitsregelung des eigenen Fahrzeugs im Sinne einer Abstandskonstantregelung bezüglich des vorausfahrenden Fahrzeugs durch. Hierzu werden Stellsignale für ein leistungsbestimmendes Stellelement der Antriebseinrichtung sowie für die Verzögerungseinrichtungen des Fahrzeugs generiert, die mittels der Datenaustauscheinrichtung 7 an eine Ausgangsschaltung 9 ausgegeben werden. Die Ausgangsschaltung 9 gibt diese Stellsignale an ein leistungsbestimmendes Stellelement 10 der Antriebseinrichtung aus, die beispielsweise als elektrisch ansteuerbare Drosselklappe, als Regelstange einer Dieseleinspritzpumpe oder als Kraftstoffmengenzumesseinrichtung eines Kraftstoffeinspritzsystem ausgeführt sein kann. Weiterhin gibt die Ausgangsschaltung 9 Stellsignale an die Verzögerungseinrichtungen 11 des Fahrzeugs aus, die in Abhängigkeit des Stellsignals einen Bremsdruck oder eine Bremskraft an den Radbremsen des Fahrzeugs aufbauen und eine Fahrzeugverzögerung, die dem Stellsignal entspricht, umsetzen. Weiterhin kann es vorgesehen sein, dass die Ausgangsschaltung 9 ein Warnsignal an eine akustische oder optische Warneinrichtung ausgibt, mittels der der Fahrer gewarnt werden kann, dass bei einem zu schnell durchgeführten Einkupplungsvorgang ein Abwürgen des Motors bevorsteht, so dass der Fahrer entweder das Gaspedal hinsichtlich einer höheren Motordrehzahl betätigen muss oder das Kupplungspedal stärker treten muss, um den Kraftschluss zwischen Motor und Getriebe zu verringern Diese Warneinrichtung kann als optische und/oder akustische Warneinrichtung ausgeführt sein und dem Fahrer mittels einer Leuchtanzeige, einer Anzeigeeinrichtung mit Textausgabe, einem akustischen Signalton oder einer Sprachausgabe ausgeführt sein. Weiterhin kann mittels der Warneinrichtung dem Fahrer mitgeteilt werden, dass während dem automatischen Anhaltevorgang, bei dem das Objektdetekionssystem 3 ein vorherfahrendes Fahrzeug erkennt, das stark verzögert und in den Stillstand abbremst, dass der Fahrer das Kupplungspedal betätigen muss, um ein automatisches Anhalten des Fahrzeugs zu ermöglichen, da der adaptive Abstands- und Geschwindigkeitsregler 1 lediglich die Bremskraftmaschine sowie die Verzögerungseinrichtungen des Fahrzeugs ansteuern kann, jedoch zum Anhalten eine fahrerbetätigte Kupplungsbetätigung notwendig ist, um den Kraftschluss zwischen Motor und Getriebe zu unterbrechen, so dass beim Abbremsen in den Stillstand der Motor nicht abgewürgt wird.

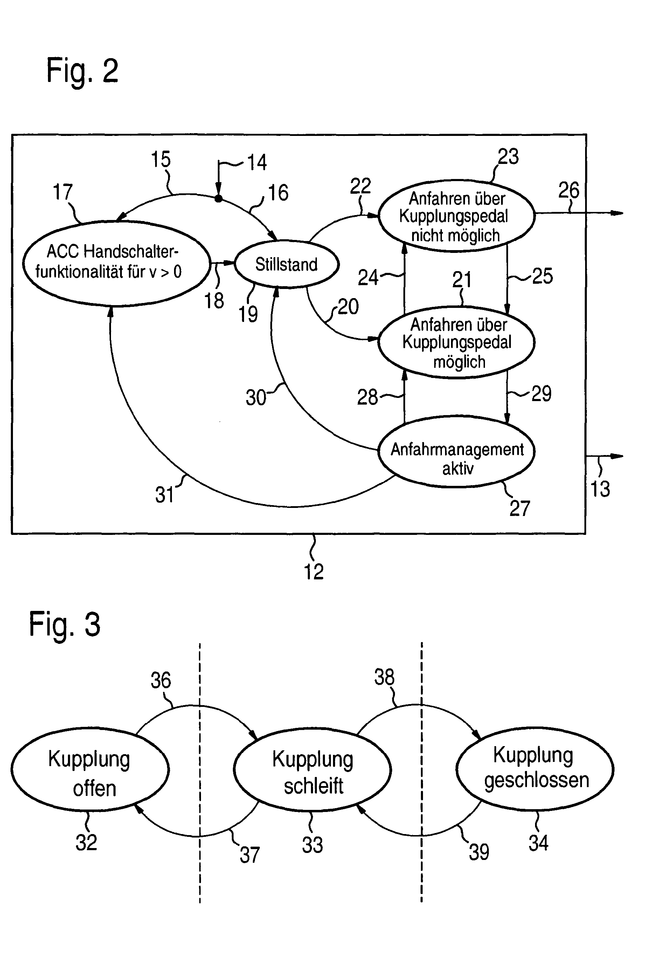

In Figur 2 ist ein Zustands-Übergangs-Diagramm dargestellt, mittels dem ein automatisches Anfahren des Fahrzeugs mit Handschaltgetriebe ermöglicht wird. Durch den Zustandsraum 12 wird das System beschrieben, wenn der adaptive Abstands- und Geschwindigkeitsregler mit der Anfahrfunktion eingeschaltet ist. Wird der adaptive Abstands- und Geschwindigkeitsregler 1 durch eine Fahrerbedienung ausgeschaltet oder deaktiviert indem beispielsweise die Bremse oder das Gaspedal getreten werden oder während eines Anfahrvorgangs der Motor abgewürgt wird, so wird das System abgeschaltet, was durch den Übergangsvektor 13 dargestellt ist, der den Zustandsraum 12 verlässt. Wird bei eingeschaltetem System der adaptive Abstands- und Geschwindigkeitsregler in Betrieb genommen, so startet das Zustands-Übergangs-Diagramm bei Pfeil 14, woraufhin entschieden wird, ob ein herkömmlicher Abstands- und Geschwindigkeitsregelbetrieb möglich ist, wenn die Fahrzeuggeschwindigkeit v > 0 ist, in diesem Fall verzweigt Pfeil 14 nach Pfeil 15 zu Zustand 17, in dem eine herkömmliche Abstands- und Geschwindigkeitsregelung durchgeführt wird. Wird das System im Stillstand aktiviert, d. h. die Fahrzeuggeschwindigkeit v = 0 erkannt, so verzweigt Pfeil 14 zum Übergang 16 und es wird der Zustand 19 aktiviert, in dem das Fahrzeug im Stillstand steht, wie es beispielsweise an Kreuzungen, in Verkehrsstauungen oder an Ampeln möglich ist. Wurde das System während der Fahrt in Betrieb genommen und der Zustand 17 eingenommen, in dem ein herkömmlicher Abstands- und Geschwindigkeitsregelbetrieb abläuft, so wird bei Unterschreitung einer Geschwindigkeitsschwelle S1, die durch den Übergang 18 dargestellt ist, der Zustand 17 in den Zustand 19 überfuhrt, so dass das Fahrzeug automatisch in einem vorbestimmten Abstand d > dₘᵢₙ hinter dem vorausangehaltenen Fahrzeug anhält. Hierbei ist es möglich, dass der Abstands- und Geschwindigkeitsregler 1 dem Fahrer eine Warnung ausgibt, dass dieser rechtzeitig die Kupplung betätigen soll, um den Kraftschluss zwischen Motor und Getriebe zu öffnen, so dass der Motor beim automatischen Anhalten nicht abgewürgt wird. Wurde das Fahrzeug in den Stillstand angehalten und der Zustand 19 eingenommen, so wird überprüft, ob ein erfindungsgemäßes automatisches Anfahren des Fahrzeugs lediglich mittels des Kupplungspedals möglich ist oder nicht. Wird festgestellt, dass der erste Gang des manuellen Schaltgetriebes eingelegt ist, die Kupplung offen ist, d. h. das Kupplungspedal durch den Fahrer getreten wird, der Motor an ist, d.h. die Motordrehzahl n > 0 ist, der Abstand d größer als der Mindestabstand dₘᵢₙ ist, sowie die Geschwindigkeit v des Fahrzeugs kleiner als eine Schwelle S2 ist, so sind alle Bedingungen für ein automatisches Anfahren des Fahrzeugs lediglich mittels des Kupplungspedals erfüllt, so dass in diesem Fall, bei Vorliegen aller Bedingungen der Zustand 19 durch den Übergang 20 in den Zustand 21 überführt wird, in dem ein automatisches Anfahren möglich ist. Wird bei Erreichen des Stillstands in Zustand 19 erkannt, dass keine oder nicht alle Bedingungen des Übergangs 20 erfüllt sind, so verzweigt der Zustand 19 mittels des Übergangs 22 zu Zustand 23, in dem ein automatisches Anfahren lediglich durch Kupplungspedalbetätigung nicht möglich ist, da beispielsweise nicht der erste Gang eingelegt ist, die Kupplung nicht getreten ist, der Motor aus ist, der Abstand d zum vorausangehaltenen Fahrzeug kleiner als ein Mindestabstand dₘᵢₙ ist oder die Geschwindigkeit v ≥ dem Schwellenwert S2 ist, da beispielsweise das Fahrzeug rollt und nicht durch die Bremse gehalten wird. Vorteilhafterweise wird dem Fahrer mitgeteilt, ob in dieser Situation der Zustand 21 oder der Zustand 23 aktiv ist, so dass dieser erkennen kann, ob ein automatisches Anfahren mittels des Kupplungspedals möglich ist oder nicht. Diese Mitteilung kann auf optische, akustische oder haptische Weise geschehen. Wurde Zustand 21 aktiviert, in dem ein automatisches Anfahren lediglich mittels des Kupplungspedals möglich ist, so geht Zustand 21 in Zustand 23 über, in dem ein automatisches Anfahren nicht möglich ist, wenn eine der Bedingungen des Übergangs 20 nicht mehr erfüllt ist. Dieser Übergang wird durch den Übergangspfeil 24 dargestellt, wodurch ein automatisches Anfahren nicht mehr möglich ist, wenn der Fahrer den ersten Gang deaktiviert, die Kupplung nicht getreten hält, die Motordrehzahl auf n = 0 abfällt, der Abstand d zum vorausangehaltenen Fahrzeug den Mindestabstand dₘᵢₙ unterschreitet oder die Geschwindigkeit v des Fahrzeugs die Schwelle S2 überschreitet. Entsprechend ist auch ein Übergang vom Zustand 23, in dem ein automatisches Anfahren mittels des Kupplungspedals nicht möglich ist, in den Zustand 21 möglich, in dem ein Anfahren mittels des Kupplungspedals möglich ist. Dieser Übergang wird durch den Übergangspfeil 25 dargestellt und wird ausgelöst, wenn alle Bedingungen zum automatischen Anfahren wie sie beispielsweise durch die Übergangsbedingungen 20 vorgesehen sind, erfüllt sind. Der Übergang 26, der Zustand 23, d. h. ein automatisches Anfahren mittels des Kupplungspedals ist nicht möglich in den Zustandsraum "System ausgeschaltet" also außerhalb des Zustandraumes 12, überführt, wird ausgelöst, wenn ein automatisches Anfahren über das Kupplungspedal nicht möglich ist, weil beispielsweise der Mindestabstand d den Mindestabstand dₘᵢₙ unterschreitet oder statt dem ersten Gang der zweite Gang eingelegt wurde oder die Fahrzeuggeschwindigkeit v über dem Schwellenwert S2 liegt, jedoch der Fahrer durch eine Zurücknahme des Kupplungspedals die Kupplung schleifen lässt und sich das Fahrzeug in Bewegung setzt, wird das System deaktiviert und der Fahrer kann in herkömmlicher Weise mittels Kupplungsbetätigung, Gaspedalbetätigung sowie manueller Schalttätigkeit das Fahrzeug in Bewegung setzen, ohne hier für den adaptiven Abstands- und Geschwindigkeitsregler 1 zu verwenden. Wurde das Fahrzeug in den Stillstand abgebremst und der Zustand 21 aktiviert, in dem ein automatisches Anfahren lediglich mittels des Kupplungspedals möglich ist, da alle Bedingungen wie erster Gang, Kupplung getreten, Motordrehzahl n > 0, Abstand d > dₘᵢₙ und Geschwindigkeit v kleiner als Schwellenwert S2 sind, kann die automatische Anfahrfunktion 27 aktiviert werden, wenn der Fahrer das Kupplungspedal zurücknimmt und die Kupplung schließt. Dieser Vorgang wird durch den Übergang 29 dargestellt, der den Zustand 21 in Zustand 27, in dem die automatische Anfahrfunktion aktiv ist, überführt. Während diesem automatischen Anfahrvorgang wird die Motordrehzahl n in Abhängigkeit des Kupplungswegs K, der mittels des Kupplungswegsensors 6 erfasst wird sowie in Abhängigkeit des momentanen Fahrwiderstands geregelt, wobei die Motordrehzahl n mit zunehmenden Schließen der Kupplung, ausgehend von der Leerlaufdrehzahl n_{LL} erhöht wird. Wird ein hoher Fahrwiderstand, beispielsweise durch eine Fahrbahnsteigung oder ein stark beladenes Fahrzeug, detektiert, so kann die Motordrehzahl n in Abhängigkeit des Kupplungsweges K mit einer größeren Steigung zunehmen als bei einem niedrigen Fahrwiderstand. Tritt der Fahrer, während die automatische Anfahrfunktion 27 aktiv ist, das Kupplungspedal und hat die Fahrzeuggeschwindigkeit v den Schwellenwert S1 bereits überschritten, so wird Zustand 27 in Zustand 21 zurücküberführt, in dem die automatische Anfahrfunktion abgebrochen wird und ein automatisches Anfahren lediglich mittels des Kupplungspedals wieder möglich ist. Ist die automatische Anfahrfunktion 27 aktiv und tritt der Fahrer das Kupplungspedal wieder durch, so dass die Kupplung geöffnet wird, jedoch hat die Fahrzeuggeschwindigkeit v bereits den Schwellenwert S1 noch nicht überschritten, so wird Zustand 27 mittels des Übergangs 30 in Zustand 19 überführt, in dem das Fahrzeug wieder in den Stillstand abgebremst wird. Mittels dieses Übergangs 30, bei dem der automatische Anfahrvorgang abgebrochen wird und das Fahrzeug wieder in den Stillstand 19 abgebremst wird, ist beispielsweise in Situationen einsetzbar, in denen eine Verkehrsstockung herrscht und das eigene Fahrzeug, beispielsweise weil sich die vorherfahrenden Fahrzeuge nur wenig vorbewegt haben, diesen Zwischenraum zurücklegen möchte und wieder anhalten soll. Ist die automatische Anfahrfunktion gemäß Zustand 27 aktiv indem das Kupplungspedal zurückgenommen wird, die Bremse automatisch gelöst wird und die Motordrehzahl n in Abhängigkeit des Kupplungsweges K gesteigert wird, fährt das Fahrzeug langsam an und beschleunigt weiter. Bleibt die Kupplung geschlossen, d. h. der Fahrer betätigt das Kupplungspedal nicht mehr und der Motor läuft, d.h., n > 0 und überschreitet die Fahrzeuggeschwindigkeit v den Schwellenwert S1, so wird Zustand 27 durch den Übergang 31 in Zustand 17 überführt, wodurch die automatische Anfahrfunktion abgeschlossen wird und das Fahrzeug im herkömmlichen Abstands- und Geschwindigkeitsregelbetrieb weiter betrieben wird. Der Schwellenwert S1 definiert damit die Geschwindigkeitsschwelle, unterhalb der die Anfahrfunktion aktiv ist und oberhalb der ein herkömmlicher Abstands- und Geschwindigkeitsregelbetrieb erfolgt. Der Schwellenwert S2 hingegen beschreibt eine Geschwindigkeit, unterhalb der das Fahrzeug als im Stillstand stehend definiert wird und oberhalb der das Fahrzeug als in Bewegung gilt. Der Schwellenwert S2 ist folglich auch kleiner als der Schwellenwert S1.

In Figur 3 ist ein weiteres Zustands-Übergangs-Diagramm dargestellt, dass den Anfahrvorgang beschreibt. In Figur 3 sind drei Zustände dargestellt, die den Betriebspunkt der Kupplung beschreiben. Zustand 32 beschreibt eine offene Kupplung, d.h., dass das Kupplungspedal durch den Fahrer vollständig durchgetreten ist und keine Kraftübertragung zwischen dem Motor und dem Getriebe erfolgt. Zustand 33 beschreibt eine schleifende Kupplung, bei dem das Kupplungspedal teilweise durch den Fahrer betätigt wird und ein Kupplungsmoment zwischen dem Motor und dem Getriebe übertragen wird, das vom momentanen Kupplungsweg, d.h. von der Auslenkung des Kupplungspedals abhängt. Zustand 34 beschreibt die geschlossene Kupplung, d.h. das Kupplungspedal wird nicht betätigt so dass das volle Motormoment an das Getriebe übertragen wird und die Motordrehzahl n gleich der Getriebeeingangsdrehzahl entspricht. Dieses Zustands-Übergangs-Diagramm ist nur dann erfindungsgemäß aktiv, wenn die automatische Anfahrfunktion 27 nach Figur 2 aktiv ist, d.h. das Zustands-Übergangs-Diagramm nach Figur 3 ist beispielsweise bei einem herkömmlichen Abstands- und Geschwindigkeitsregelbetrieb gemäß Zustand 17 aus Figur 2 nicht anzuwenden. Ist die automatische Anfahrfunktion 27 aktiv und das Kupplungspedal wird vom offenen Zustand in einen schleifenden Zustand überführt, so dass Übergang 36 stattfindet, so ist es notwendig, dass der adaptive Abstands- und Geschwindigkeitsregler 1 die Verzögerungseinrichtungen 11 des Fahrzeugs löst, so dass die Bremse geöffnet wird, um ein Anfahren zu ermöglichen. Weiterhin ist es nötig, dass der adaptive Abstands- und Geschwindigkeitsregler 1 die Motordrehzahl n in Abhängigkeit des momentanen Kupplungswegs K der mittels des Kupplungswegsensors 6 detektierbar ist, sowie des momentanen Fahrwiderstands, der durch das Gewicht und die Fahrbahnsteigung bestimmt wird, geregelt wird. Während die Kupplung schleift, d.h., während des Zustands 33 muss die Drehzahl n des Motors derart geregelt werden, dass ein Abwürgen des Motors infolge der Kupplungsbetätigung verhindert wird. Wird die Kupplung weiterhin derart betätigt, dass sie von einem schleifenden Zustand 33 in einen geschlossenen Zustand 34, in dem Motor und Getriebe kraftschlüssig miteinander verbunden sind, mittels des Übergangs 38 überführt wird, wird die Motordrehzahlregelung von der automatischen Anfahrfunktion an die herkömmliche Abstands- und Geschwindigkeitsregelfunktion übergeben, sofern die Geschwindigkeitsschwelle S1 überschritten wird. Wird die Kupplung durch den Fahrer vom geschlossenen Zustand 34 aus betätigt, so findet der Übergang 39 zum Zustand 33 statt, in dem die Kupplung schleift, sowie bei einer weiteren Kupplungsbetätigung ein Übergang 37 vom schleifenden Zustand 33 in den offenen Zustand 32 statt. Während diesen Übergängen 39 und 37 ist es notwendig, dass der adaptive Abstands- und Geschwindigkeitsregler bei einer Unterschreitung der Geschwindigkeitsschwelle S1 die Fahrzeugverzögerungseinrichtungen 11 derart ansteuert, dass das Fahrzeug in einem ausreichenden Abstand d > dₘᵢₙ hinter dem vorausanhaltenden Fahrzeug anhält sowie dass die Motordrehzahl n auf die Leerlaufdrehzahl n_{LL} geregelt wird.

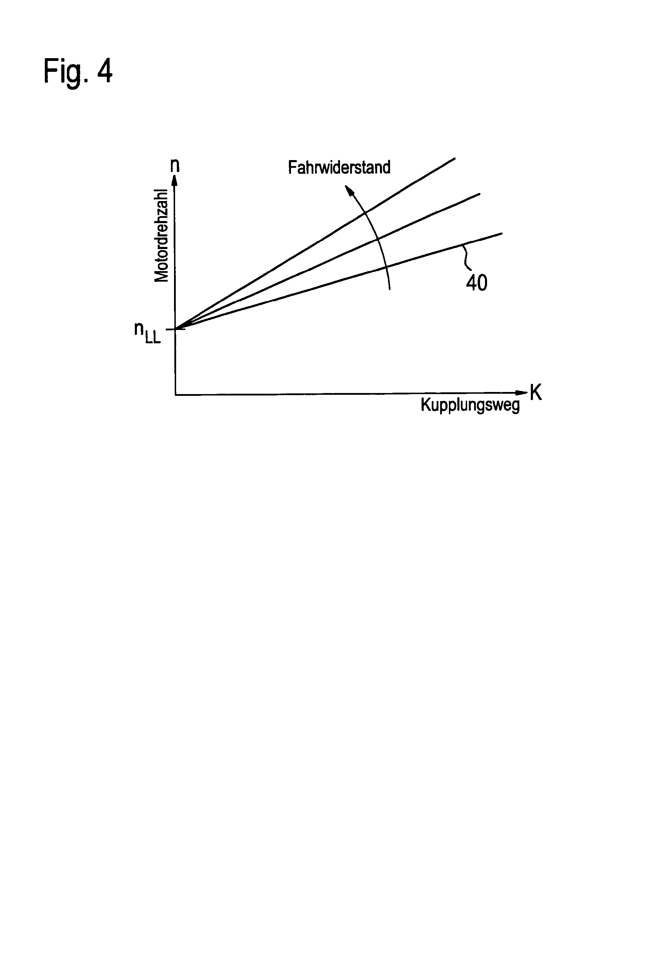

In Figur 4 ist ein Diagramm dargestellt, das die Motordrehzahl n in Abhängigkeit des Kupplungsweges K während der automatischen Anfahrfunktion darstellt. Ist das Kupplungspedal durch den Fahrer vollständig durchgetreten, d.h. der Kraftschluss zwischen Motor und Getriebe vollständig unterbrochen, so wird die Motordrehzahl n auf die Leerlaufdrehzahl n_{LL} geregelt. Wird das Kupplungspedal derart betätigt, dass der Kupplungsweg K ansteigt, so dass das Motormoment teilweise an das Getriebe übertragen wird, wird die Motordrehzahl n mit steigendem Kupplungsweg K erhöht. Dabei kann zwischen den Kupplungsweg K und der Motordrehzahl n ein lineares Verhältnis in Form einer Geraden 40 bestehen. Der Zusammenhang zwischen der Motordrehzahl n und dem Kupplungsweg K kann jedoch auch andere Formen annehmen, beispielsweise inform einer quadratischen Funktion oder einer beliebigen, empirisch ermittelten Funktion. Bei höherem Fahrwiderstand, d.h. bei großer Fahrzeugzuladung oder einer starken Fahrbahnsteigung während dem automatischen Anfahren ist es vorteilhaft, dass die Motordrehzahl n in Abhängigkeit des Kupplungsweges K stärker erhöht wird als bei niedrigerem Fahrwiderstand. Da die Kupplungsbetätigung für ein ordnungsgemäßes Funktionieren des beschriebenen Verfahrens und der beschriebenen Vorrichtung notwendig ist, ist es weiterhin vorteilhaft, dass der Schleifpunkt der Kupplung, d.h., der Kupplungswegwert K, ab dem eine Kraftübertragung zwischen Motor und Getriebe stattfindet, in vorbestimmten Zeiträumen bestimmt wird und dieser Schleifpunkt innerhalb des adaptiven Abstands- und Geschwindigkeitsreglers, in dem die automatische Anfahrfunktion abläuft, abgespeichert wird. Zur Bestimmung des Schleifpunkts der Kupplung ist es möglich, die Motordrehzahl n sowie die Getriebeeingangsdrehzahl oder eine damit verbundene Größe wie die Getriebeausgangsdrehzahl in Verbindung mit der Getriebeübersetzung miteinander zu vergleichen und hiermit den Kupplungsweg K zu bestimmen, ab dem eine Kraftübertragung erfolgt.

## Patentansprüche

1. Verfahren zum automatischen Anfahren eines mit einer Objektsensorik (3) und einem adaptiven Abstands- und Geschwindigkeitsregler (1) ausgestatteten Fahrzeugs mit Handschaltgetriebe aus dem Stillstand, in dem der Fahrer zur Durchführung des Anfahrvorgangs nur das Kupplungspedal (6) betätigt, wobei für ein Anfahren mittels Kupplungspedalbetätigung (6) der erste Gang eingelegt, die Kupplung getreten und der Motor in Betrieb (n>0) sein muss.

2. Verfahren nach Anspruch 1, **dadurch gekennzeichnet, dass** die Motordrehzahl (n) während des Anfahrvorgangs in Abhängigkeit von der Kupplungspedalbetätigung (6) geregelt wird.

3. Verfahren nach Anspruch 1 oder 2, **dadurch gekennzeichnet, dass** die Motordrehzahl (n) in Abhängigkeit des momentanen Fahrwiderstands geregelt wird.

4. Verfahren nach einem der vorhergehenden Ansprüche, **dadurch gekennzeichnet, dass** zu Beginn des Einkuppelvorgangs die Bremse (11) selbstätig geöffnet wird.

5. Verfahren nach einem der vorhergehenden Ansprüche, **dadurch gekennzeichnet, dass** die Kupplungsbetätigung mittels eines Vergleichs der Motordrehzahl mit der Getriebeeingangsdrehzahl ermittelt wird.

6. Verfahren nach einem der vorhergehenden Ansprüche, **dadurch gekennzeichnet, dass** ein Anfahren mittels Kupplungsbetätigung nur dann möglich ist, wenn der Abstand (d) des Fahrzeugs zum vorausbefindlichen Fahrzeug im Stillstand (v=0) einen Mindestabstand (dmin) überschreitet.

7. Verfahren nach einem der vorhergehenden Ansprüche, **dadurch gekennzeichnet, dass** der Anfahrvorgang abgeschlossen wird, wenn die Motordrehzahl gleich der Getriebeeingangsdrehzahl ist und der Kupplungsweg (6) einen Schwellenwert (Kmin) überschritten hat

8. Vorrichtung zum automatischen Anfahren eines mit einer Objektsensorik (3) und einem adaptiven Abstands- und Geschwindigkeitsregler (1) ausgestatteten Fahrzeugs mit Handschaltgetriebe aus dem Stillstand, indem der Vorrichtung ein Kupplungsbetätigungssignal (6), zuführbar ist und in Abhängigkeit des zugeführten Signals die Motordrehzahl (n) regelbar ist, **dadurch gekennzeichnet, dass** in dem adaptiven Abstands- und Geschwindigkeitsregler (1) das Verfahren nach einem der Ansprüche 1 bis 7 ausgeführt wird.

9. Vorrichtung nach Anspruch 8, **dadurch gekennzeichnet, dass** der adaptive Abstands- und Geschwindigkeitsregler (1) bei Beginn des Einkupplungsvorgangs selbstätig die Bremse (11) löst.

10. Vorrichtung nach einem der Ansprüche 8 oder 9, **gekennzeichnet durch** zur Ermittlung der Kupplungsbetätigung einen Kupplungswegsensor (6).

11. Vorrichtung nach einem der Ansprüche 8 bis 10, **dadurch gekennzeichnet, dass** die Objektsensorik (3) als Radarsensor, als Lasersensor, als Ultraschallsensor, als Videosensor oder als eine Kombination dieser Sensorarten ausgeführt ist.

12. Vorrichtung nach einem der Ansprüche 8 bis 11, **dadurch gekennzeichnet, dass** die Motordrehzahl (n) dem Abstands- und Geschwindigkeitsregler (1) zugeführt wird und bei einer Unterschreitung einer Mindestmotordrehzahl (nmin) während des Einkuppelvorgangs eine Fahrerwarnung ausgegeben wird.

## Claims

1. Method for automatically starting up a vehicle, which has a manual transmission and is equipped with an object sensor system (3) and an adaptive distance and speed controller (1), from a standstill by the driver operating only the clutch pedal (6) in order to carry out the start-up process, with the first gear having to be engaged, the clutch having to be depressed and the engine having to be in operation (n>0) for start-up by means of clutch pedal operation (6).

2. Method according to Claim 1, **characterized in that** the engine rotation speed (n) is controlled as a function of clutch pedal operation (6) during the start-up process.

3. Method according to Claim 1 or 2, **characterized in that** the engine rotation speed (n) is controlled as a function of the instantaneous resistance to motion.

4. Method according to one of the preceding claims, **characterized in that** the brake (11) is automatically released at the beginning of the engagement process.

5. Method according to one of the preceding claims, **characterized in that** clutch operation is detected by means of comparing the engine rotation speed with the transmission input rotation speed.

6. Method according to one of the preceding claims, **characterized in that** start-up by means of clutch operation is only possible when the distance (d), when at a standstill (v=0), of the vehicle from the vehicle located ahead exceeds a minimum distance (dmin).

7. Method according to one of the preceding claims, **characterized in that** the start-up process is terminated when the engine rotation speed is equal to the transmission input rotation speed and the clutch travel (6) has exceeded a threshold value (Kmin).

8. Apparatus for automatically starting up a vehicle, which has a manual transmission and is equipped with an object sensor system (3) and an adaptive distance and speed controller (1), from a standstill by it being possible for the apparatus to supply a clutch operation signal (6) and it being possible to control the engine rotation speed (n) as a function of the supplied signal, **characterized in that** the method according to one of Claims 1 to 7 is executed in the adaptive distance and speed controller (1).

9. Apparatus according to Claim 8, **characterized in that** the adaptive distance and speed controller (1) automatically releases the brake (11) at the beginning of the engagement process.

10. Apparatus according to one of Claims 8 and 9, **characterized by** a clutch travel sensor (6) for determining clutch operation.

11. Apparatus according to one of Claims 8 to 10, **characterized in that** the object sensor system (3) is designed as a radar sensor, as a laser sensor, as an ultrasound sensor, as a video sensor or as a combination of these types of sensor.

12. Apparatus according to one of Claims 8 to 11, **characterized in that** the engine rotation speed (n) is supplied to the distance and speed controller (1) and a driver warning is emitted when the engine rotation speed falls below a minimum engine rotation speed (nmin) during the engagement process.

## Revendications

1. Procédé de démarrage automatique d'un véhicule automobile, équipé d'un système de détection d'objets (3) et d'un régulateur adaptatif de distance et de vitesse (1), au moyen d'une boîte de vitesses mécanique à partir de l'arrêt, selon lequel le conducteur actionne seulement la pédale d'embrayage (6) pour effectuer le processus de démarrage, et la première vitesse doit être enclenchée, l'embrayage actionné et le moteur en fonctionnement (n>0) pour un démarrage au moyen de l'actionnement de la pédale d'embrayage (6).

2. Procédé selon la revendication 1,
**caractérisé en ce que**
le régime du moteur (n) est régulé pendant le processus de démarrage en fonction de l'actionnement de la pédale d'embrayage (6).

3. Procédé selon la revendication 1 ou 2,
**caractérisé en ce que**
le régime du moteur (n) est régulé en fonction de la résistance momentanée à l'avancement.

4. Procédé selon l'une des revendications précédentes,
**caractérisé en ce que**
le frein (11) se desserre automatiquement au début du processus d'embrayage.

5. Procédé selon l'une des revendications précédentes,
**caractérisé en ce que**
l'actionnement de l'embrayage est déterminé au moyen d'une comparaison du régime du moteur avec le régime d'entrée de la boîte de vitesses.

6. Procédé selon l'une des revendications précédentes,
**caractérisé en ce qu'**
un démarrage au moyen de l'actionnement de l'embrayage n'est possible que si la distance (d) du véhicule par rapport au véhicule qui précède dépasse à l'arrêt (v=0) une distance minimale (dmin).

7. Procédé selon l'une des revendications précédentes,
**caractérisé en ce que**
le processus de démarrage est terminé lorsque le régime du moteur est égal au régime d'entrée de la boîte de vitesses et le trajet d'embrayage (6) a dépassé une valeur seuil (Kmin).

8. Dispositif de démarrage automatique d'un véhicule automobile, équipé d'un système de détection d'objets (3) et d'un régulateur adaptatif de distance et de vitesse (1), au moyen d'une boîte de vitesses mécanique à partir de l'arrêt, dans lequel un signal d'actionnement de l'embrayage (6) est amené au dispositif et le régime du moteur (n) est réglable en fonction du signal amené,
**caractérisé en ce que**
le procédé selon l'une des revendications 1 à 7 est réalisé dans le régulateur adaptatif de distance et de vitesse (1).

9. Dispositif selon la revendication 8,
**caractérisé en ce que**
le régulateur adaptatif de distance et de vitesse (1) desserre automatiquement le frein (11) au début du processus d'embrayage.

10. Dispositif selon l'une des revendications 8 ou 9,
**caractérisé par**
un détecteur de trajet d'embrayage pour déterminer l'actionnement de l'embrayage.

11. Dispositif selon l'une des revendications 8 à 10,
**caractérisé en ce que**
le système de détection d'objets (3) est réalisé en tant que capteur radar, capteur à laser, capteur à ultrasons, capteur vidéo ou en tant que combinaison de ces types de capteurs.

12. Dispositif selon l'une des revendications 8 à 11,
**caractérisé en ce que**
le régime du moteur (n) est transmis au régulateur adaptatif de distance et de vitesse (1) et, si un régime minimal du moteur (nmin) n'est pas atteint pendant le processus d'embrayage, un avertissement est émis pour le conducteur.
